(19) Europäisches Patentamt
European Patent Office
Office européen des brevets

(11) EP 0 739 949 B1

(12) EUROPEAN PATENT SPECIFICATION

(45) Date of publication and mention of the grant of the patent:
**16.09.1998 Bulletin 1998/38**

(51) Int Cl.[6]: **C09B 1/50**, B41M 5/38, C09D 11/00

(21) Application number: **96111402.2**

(22) Date of filing: **23.12.1988**

# (54) Sublimation thermal-transfer printing

Thermischer Sublimationstransferdruck

Impression par sublimation et transfert par la chaleur

(84) Designated Contracting States:
**DE FR GB**

(30) Priority: **29.12.1987 JP 333167/87**
**29.12.1987 JP 333168/87**
**13.01.1988 JP 3686/88**

(43) Date of publication of application:
**30.10.1996 Bulletin 1996/44**

(62) Document number(s) of the earlier application(s) in accordance with Art. 76 EPC:
**88312272.3 / 0 323 744**

(73) Proprietor: **Mitsui Chemicals, Inc.**
**Tokyo 100 (JP)**

(72) Inventors:
- **Takuma, Keisuke**
  **Yokohama-shi, Kanagawa (JP)**
- **Ohyama, Tsukasa**
  **Ohmuta-shi, Fukuoka-ken (JP)**
- **Mikoda, Tamio**
  **Ohmuta-shi, Fukuoka-ken (JP)**
- **Ghoda, Isamu**
  **Kobe-shi, Hyogo-ken (JP)**
- **Koshida, Hitoshi**
  **Kawasaki-shi, Kanagawa-ken (JP)**
- **Igata, Akitoshi**
  **Ohmuta-shi, Fukuoka-ken (JP)**

(74) Representative: **Stuart, Ian Alexander et al**
**MEWBURN ELLIS**
**York House**
**23 Kingsway**
**London WC2B 6HP (GB)**

(56) References cited:
**DE-A- 3 524 833** **FR-A- 1 262 253**
**JP-A-61 227 093** **US-A- 2 773 071**

Remarks:
The file contains technical information submitted after the application was filed and not included in this specification

EP 0 739 949 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This application was divided out of application 88312272.3 (EP-A-323 744), which now claims materials for thermal transfer recording incorporating certain 1,4-diaminoanthraquinone dyestuffs.

The present invention relates to the use of magenta anthraquinone dyestuffs for sublimation thermal-transfer, and in particular certain 1-amino-4-hydroxyanthraquinones.

Preferred embodiments employ magenta anthraquinones having good adhesion and color development properties as well as excellent fastness, in a method for producing images using a thermal head for heating and sublimation transfer thereof.

The anthraquinones may be such as to enable one to obtain color hard copies through a CRT color display, a color facsimile, a magnetic camera and the like utilizing a transfer type heat-sensitive recording system as the means for recording information.

Japanese Patent Laid-open Publication No. 78896/1984 discloses the use of compounds represented by the following general formula (A) as a magenta dyestuff for sublimation thermal transfer:

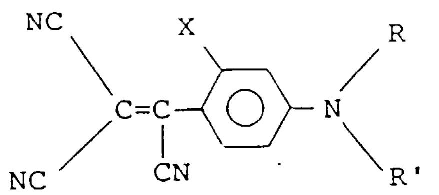

(A)

wherein X is a hydrogen atom or methyl group, and R and R' are each a methyl group, ethyl group or straight-chain or branched propyl or butyl group.

However, dyestuffs having the general formula (A) have poor light fade resistance and thus the preservation of information records employing such dyestuffs is defective.

In Japanese Patent Laid-open Publication No. 131293/1985, as magenta dyestuffs for sublimation thermal-transfer there are disclosed anthraquinones which are represented by the following general formula (B):

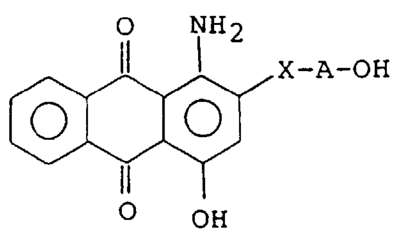

(B)

wherein X is an oxygen atom or sulfur atom, and A is a straight-chain or branched alkylene group, alkylene-O-alkylene group, alkylene-S-alkylene group, cyclohexylene group, phenylene group,

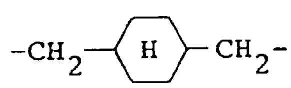

or

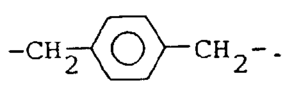

However, undesirably a great deal of energy is required to transfer these dyestuffs and the cost of a machine which uses them is thus uneconomically high.

Moreover, known l-amino-2-phenoxy-4-hydroxyanthraquinone (CI. No. Disp Red 60), 1-amino-2-phenylthio-4-hydroxyanthraquinone (Japanese Patent Laid-open Publication No. 159091/1985) and 1,4-diamino-2,3 bisphenoxyanthraquinone (Japanese Patent Laid-open Publication No. 268495/1986) are also used, but they are poor in solubility in solvents employed in an ink-based process, they have poor sublimation properties and are unsatisfactory with respect to dyestuff adhesion and fastness properties.

Moreover, these anthraquinone dyestuffs have a yellowish color and therefore magenta dyestuffs in which absorption occurs in a longer wavelength range are in strong demand.

JP-A-61227093 discloses the use in thermal transfer recording of 1-amino-2-phenoxy-4-hydroxyanthraquinone dyes containing a substituent selected from $C_{2-10}$-alkyl, alkoxy and $CF_3$ on the phenoxy group.

The present invention is directed to a sublimation thermal transfer process employing a magenta anthraquinone dyestuff represented by the general formula (I):

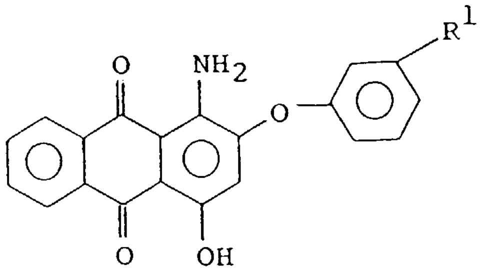

(I)

wherein $R^1$ is methyl, methoxy or a halogen atom (preferably CL).

In a second aspect, this invention relates to an ink for sublimation thermal transfer processes employing an anthraquinone of formula (I), a resin and a solvent.

Some preferred embodiments will now be described in greater detail.

Preferred dyestuffs used in this invention can easily be dissolved in a solvent, are excellent with respect to convertibility into ink, sublimation and fastness and are free from migration into and contamination of the base material to which they are transferred by sublimation. The anthraquinones represented by the formula (I), are described hereinbelow in accordance with preferred embodiments.

Halogen atoms include fluorine, chlorine, bromine and iodine.

Compounds used in the invention have $R^1$ at the m-position, and have better solubility in solvents employed for ink formation, which is the essential requirement of the transfer dyestuff, than the corresponding positional isomers in which $R^1$ is at the o- or p-position.

Additionally, when thermally transferred, the amount thereof to be transferred can be regulated by altering the energy which is fed to the heat-transfer head, so that gradation recordings can easily be produced. Therefore, these magenta anthraquinones are suitable for full color records.

The anthraquinones represented by the general formula (I) of the present invention generally have the following common characteristics:

They are stable to heat, light, moisture and chemicals and thus are not thermally decomposed during transfer recording and the recorded images produced therefrom have excellent stability.

The compounds have good solubility in organic solvents and good dispersibility in water. Highly concentrated ink in which the dyestuff is uniformly dissolved or dispersed can easily be produced. Consequently, images having good color density can be recorded. Thus, these compounds are commercially valuable.

The 1-amino-2-phenoxy-4-hydroxyanthraquinones represented by the general formula (I) can be synthesized by thermally reacting a 1-amino-2-chloro-4-hydroxyanthraquinone, of the formula (II):

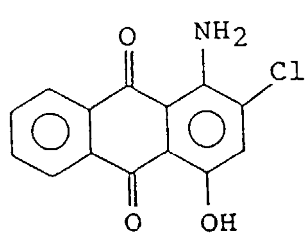

(II)

with a phenol represented by the formula

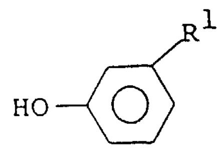

wherein $R^1$ is the same as defined in the general formula (I), in an aprotic polar solvent in the presence of a base.

Procedures for heat transfer printing of synthetic materials are disclosed in French Patent Nos. 1213330 and 1585119 and in German Patent No. 1769757, and dyestuffs, regulators and auxiliary carriers used in such procedures are disclosed in German Laid-open Patent Applications Nos. 1771813 and 1771812.

An ink for thermal transfer record from an anthraquinone of general formula (I) can be prepared by mixing the dyestuff with a suitable resin, solvent and the like. Furthermore, the thermal transfer may be accomplished by first applying the thus obtained ink onto a suitable transfer substrate to form a transfer sheet and then applying this sheet onto the face of the printable substrate onto which an image is to be recorded, and heating and pressing the resulting laminate from the back surface of the transfer sheet by means of a heat-transfer recording head.

The resin used for the preparation of the ink can be one which is used for the manufacture of conventional printing inks, examples of which include oil resins such as rosin, phenolic resin, xylene resin, petroleum resin, vinyl resin, polyamide, alkyd resin, nitrocellulose and alkylcellulose; and aqueous resins such as maleic resin, acrylic resin, casein resin, shellac and glue.

Examples of the solvent which can be used for the preparation of the ink include alcohols such as methanol, ethanol, propanol and butanol; cellosolves such as methyl cellosolve and ethyl cellosolve; aromatics such as benzene, toluene and xylene; esters such as ethyl acetate and butyl acetate; ketones such as acetone, methyl ethyl ketone and cyclohexanone; hydrocarbons such as ligroin, cyclohexane and kerosene; and dimethylformamide. If an aqueous resin is selected, water or a mixture of water and one of the above-mentioned water-miscible solvents can be used.

Suitable examples of transfer substrates onto which the ink is applied include thin papers such as condenser paper and glassine paper; and films of plastics having good heat resistance, such as polyester, polyamide and polyimide. The thickness of the transfer substrate preferably is in the range of 5 to 50 μm so as to increase the heat transfer efficiency from the heat-transfer recording head to the dyestuff.

Examples of the printable materials onto which images can be recorded include fibers, fabrics, films, sheets and molded articles made from polyolefine resins, such as polyethylene and polypropylene; halogenated polymers such as polyvinyl chloride and polyvinylidene chloride; vinyl polymers such as polyvinyl alcohol, polyvinyl acetate and polyacrylic esters; polyester resins, such as polyethylene terephthalate and polybutylene terephthalate; polystyrene resins; polyamide resins; copolymer resins of olefins, such as ethylene and propylene and other vinyl monomers; ionomers; cellulosic resins, such as cellulose diacetate and cellulose triacetate; polycarbonates; polysulfones; polyamides and the like.

Particularly preferred as substrates are fabrics, sheets and films made from polyethylene terephthalate.

Additionally, there can be employed the usual papers employed in thermal printing, e.g., cellulosic papers coated or impregnated with the above-mentioned resins containing acidic fine particles such as silica gel, laminates of resin films, and specially processed papers which have been subjected to an acetylation treatment. When these special papers are used as the printable substrate, good images can be recorded thereon which are excellent in image stability at a high temperature and a high humidity. Moreover, synthetic papers made from various resins can be also used.

After transfer recording the printed surface can be covered with a clear coating. For example, a polyester film can be laminated onto the surface bearing the transferred and recorded image by heat pressing, whereby the color development of the dyestuff and the storage stability of recorded image can be improved.

The performance of the dyestuffs represented by the general formula (I) will be described in detail in accordance with examples which follow, in which examples, "part" and "parts" are based on weight. Firstly general methods will be described in connection with a compound disclosed and claimed in the parent application from which this application is divided.

Example 1 of EP-A-0323744

(i) Preparation of Ink

| | |
|---|---|
| 1,4-Diamino-2(3-methylphenoxy)anthraquinone | 3 parts |
| Polybutyral resin | 4.5 parts |
| Methyl ethyl ketone | 46.25 parts |

(continued)

| | |
|---|---|
| Toluene | 14.0 parts |

To prepare an ink, the mixture of the above-mentioned composition was blended by mixing with glass beads for about 30 minutes by means of a paint conditioner.

(ii) Preparation of Transfer Sheet

The thus prepared ink was applied in a conventional manner onto a 9 μm polyethylene terephthalate film, the back surface of which had been subjected to a heat resistance treatment by the use of a gravure calibrater (plate depth = 30 μm). The ink was applied at a such a rate that the dry weight was about 1.0 $g/m^2$. Afterwards, the applied ink was dried by heating the film.

(iii) Preparation of Material to be Recorded

| | |
|---|---|
| Polyester Resin (Vylon 103; Toyobo Co., Ltd.; Tg = 47°C) | 0.8 part |
| EVA Polymeric Plasticizer (Erbaloy 741p; Mitsui Polychemical Co., Ltd.; Tg = -37°C) | 0.2 part |
| Amino-modified Silicone (KF-857; The Shin-Etsu Chemical Co., Ltd.) | 0.04 part |
| Epoxy-modified Silicone (KF-103; The Shin-Etsu Chemical Co., Ltd.) | 0.04 part |
| Methyl Ethyl Ketone/Toluene/Cyclohexane (weight ratio = 4 : 4 : 2) | 9.0 parts |

These components were mixed conventionally in order to prepare a coating solution, which was then applied onto a face of a synthetic paper such as polyethylene or polyester using a bar coater (RK Print Coat Instruments Co., Ltd.; No. 1) at a dry weight rate of about 4.5 $g/m^2$, followed by drying at 100°C for 15 minutes.

(iv) Transfer Recording

The ink-bearing face of the transfer sheet was placed against the coated face of the thus-produced synthetic paper so that the inked surface of the former was in intimate contact with the coated surface of the latter and recording was then achieved by heating and pressing the resulting laminate from the back surface of the transfer sheet by a heat-transfer recording head under conditions of a voltage = 10 V and a printing time of 4.0 milliseconds, whereby an image having a magenta color and a color density of 1.9 was recorded.

The color density was measured by the use of a densitometer, model RD-514 (filter = Latten No. 58) made by U. S. Macbeth Co., Ltd. and was calculated in accordance with the following formula:

$$\text{Color Density} = \log_{10} (Io/I)$$

Io = Intensity of reflected light from a standard white reflective plate
I = Intensity of reflected light from a specimen.

For the recorded image, a light resistance test was carried out by the use of a xenon fade meter (Suga Testing Machine Co., Ltd.) at a black panel temperature of 63 ± 2°C and 90% relative humidity. This test confirmed that the recorded image was scarcely discolored by the irradiation for 40 hours and was excellent in stability at high temperatures and high humidity.

The color fastness of the recorded image was evaluated by allowing the specimen to stand at 50°C for 48 hours, and then observing the vividness of the image and the colored state of the white paper after the surface of the specimen had been rubbed against a white paper. According to this test, the vividness of the image was unchanged and the white paper against which the image surface had been rubbed was not colored, which indicated that the fastness of the recorded image was good.

In the following examples and comparative examples, the preparation of inks, transfer sheets and materials to be recorded as well as the transfer recording were carried out in accordance with the same procedure. The resulting color densities are set forth in Table 1.

Example 1

1-Amino-2(3-methylphenoxy)-4-hydroxyanthraquinone was used as the dyestuff and a magenta color image having a color density of 1.9 was recorded.

The stability of the image at a high temperature and a high humidity was excellent. In the color fastness test, the vividness of the recorded image was unchanged and a white paper against which the surface of the image had been rubbed was not colored. In addition, color fastness was good.

Examples 2 and 3

In these examples the respective dyestuffs shown in Table 1 were used and vivid magenta color images having color densities shown in Table 1 were transferred and recorded.

Furthermore, the light resistance and fastness of the recorded images were good, as in Example 1.

Comparative Example 1

1,4-Diamino-2(2-hydroxyphenoxy)anthraquinone was used as the dyestuff and a magenta color image having a color density of only 0.61 was recorded. In the color fastness test, the vividness of the recorded image was poor and a white paper against which the surface of the image had been rubbed was colored.

Comparative Example 2

1,4-Diamino-2(4-hydroxyphenoxy)anthraquinone was used as the dyestuff and a magenta color image having a color density of only 0.54 was recorded. Moreover, in the color fastness test, the vividness of the recorded image was poor and a white paper against which the surface of the image had been rubbed was colored.

Comparative Example 3

1-Amino-2-phenoxy-4-hdroxyanthraquinone was used as the dyestuff to prepare an ink. However, the dyestuff did not dissolve acceptably in the solvent and a part of the dyestuff remained undissolved in the form of coarse crystals.

Material to be recorded, application of the ink to a transfer sheet and drying were then carried out as described above. The transfer sheet produced therefrom was not uniform and coarse grains were deposited thereon.

Transfer recording was performed using the transfer sheet. A non-uniform image was transferred and recorded and overall the quality of the image was poor.

Comparative Examples 4 and 5

1-Amino-2(2-methylphenoxy)-4-hydroxyanthraquinone and 1-amino-2(4-methoxyphenoxy)-4-hydroxyanthraquinone were used as dyestuffs to prepare thermal inks. Materials to be recorded were then prepared, followed by applying the ink to the transfer sheet, drying and transfer recording, all as in Comparative Example 3. The results obtained with the respective dyestuffs were similar to those of Comparative Example 3 and the overall quality of the images was poor.

Table 1

| | Dyestuff | Color Density |
|---|---|---|
| Example 1 | 1-Amino-2(3-methylphenoxy)-4-hydroxyanthraquinone | 1.9 |
| Example 2 | 1-Amino-2(3-methoxyphenoxy)-4-hydroxyanthraquinone | 1.8 |
| Example 3 | 1-Amino-2(3-chlorophenoxy)-4-hydroxyanthraquinone | 1.6 |

Table 1 (Cont'd.)

| | Dyestuff | Color Density |
|---|---|---|
| Comp. Ex. 1 | 1,4-Diamino-2(2-hydroxyphenoxy)anthraquinone | 0.61 |
| Comp. Ex. 2 | 1,4-Diamino-2(4-hydroxyphenoxy)anthraquinone | 0.54 |
| Comp. Ex. 3 | 1-Amino-2-phenoxy-4-hydroxyanthraquinone | 1.2 |
| Comp. Ex. 4 | 1-Amino-2(2-methylphenoxy)-4-hydroxyanthraquinone | 1.0 |
| Comp. Ex. 5 | 1-Amino-2(4-methoxyphenoxy)-4-hydroxyanthraquinone | 0.8 |

## Claims

1. A sublimation thermal transfer process characterised in that it employs a magenta anthraquinone of the formula

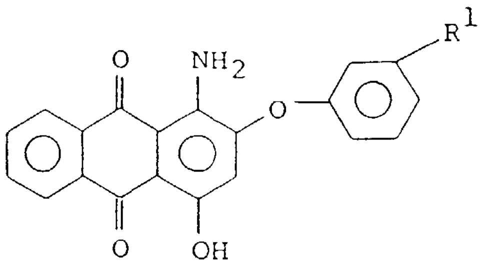

(I)

wherein $R^1$ is methyl, methoxy, or halogen.

2. The process of claim 1 wherein $R^1$ is chlorine.

3. An ink for thermal transfer recording comprising an anthraquinone of the formula (I) as defined in claim 1 a resin, and a solvent.

4. The ink of claim 3 wherein $R^1$ is chlorine.

## Patentansprüche

1. Thermisches Übertragungsverfahren durch Sublimation, dadurch gekennzeichnet, daß es ein Magentaanthrachinon der Formel

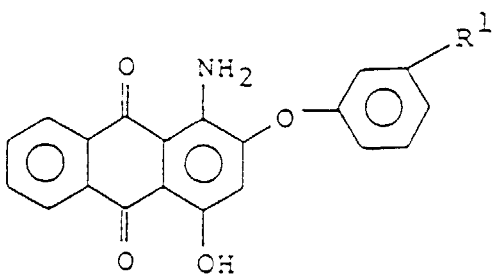

(I)

verwendet, worin $R^1$ Methyl, Methoxy oder Halogen ist.

2. Verfahren nach Anspruch 1, worin $R^1$ Chlor ist.

3. Tinte zur thermischen Übertragungsaufzeichnung, welche ein wie in Anspruch 1 definiertes Anthrachinon der Formel (I), ein Harz und ein Lösungsmittel umfaßt.

4. Tinte nach Anspruch 3, worin $R^1$ Chlor ist.

## Revendications

1. Procédé de transfert thermique par sublimation, caractérisé en ce qu'il fait appel à une anthraquinone magenta de la formule

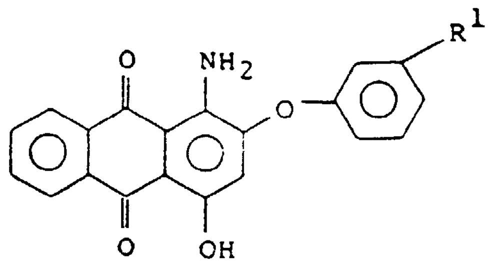

(I)

dans laquelle $R^1$ est méthyle, méthoxy ou halogène.

**2.** Procédé selon la revendication 1, dans lequel $R^1$ est le chlore.

**3.** Encre pour l'enregistrement par transfert thermique, comprenant une anthraquinone de la formule (I) telle que définie dans la revendication 1, une résine et un solvant.

**4.** Encre selon la revendication 3, dans laquelle $R^1$ est le chlore.